# EUROPEAN PATENT APPLICATION

(11) **EP 3 043 144 A1**
(43) Date of publication of application: **13.07.2016**
(21) Application number: 15150516.1
(22) Date of filing: 08.01.2015
(51) Int. Cl.: G01B 11/24, B25J 15/06

(54) **Apparatus for, fixture for, and method of measuring geometric properties of a helical metallic spring**

(71) Applicant: NOVO NORDISK A/S, 2880 Bagsværd (DK)
(72) Inventor: Dybdal Reimer, Søren, 3460 Birkerød (DK)

(57) **Abstract**

Apparatus (11) for measuring geometric properties of a helical metallic spring (1), wherein the apparatus (11) comprises;
- a vision measurement system (13), for visually measuring the geometric properties of the spring (1), the system (13) comprising a detector (19) and a light source (21) directed towards the detector (19),
- a fixture (101), for holding the spring (1) during measurements, such that the spring (1) is located in the line-of-sight (23) between the detector (19) and the light source (21), and
- a rotator (17), wherein the rotator (17) is operably connected to the fixture (101) such that the fixture (101) can rotate about a rotation axis (103),

wherein the fixture (101) comprises a body (105), wherein the body (105) is configured with two linear support lines (107), for supporting the spring (1) on the fixture (101), wherein the support lines (107) are parallel, wherein the width of the body (105) is less than the spring diameter, wherein the support lines (107) are arranged such that the central axis of the spring (1) and the rotation axis (103) of the fixture (101) are coinciding, wherein the fixture (101) comprises a holding means (109), for holding the spring (1) onto the fixture (101) during measurements, a fixture (101) and a method of measuring geometric properties of a helical metallic spring.

## Description

The current invention relates to an apparatus for measuring geometric properties of a helical metallic spring.

Moreover the current invention relates to a fixture for use in an apparatus for measuring geometric properties of a helical metallic spring.

Furthermore the current invention relates to a method of measuring geometric properties of a helical metallic spring

### Background of the invention

Verification of geometric properties of helical springs after manufacturing is important to ensure that the springs meet the required specifications. Springs that do not meet the requirements, i.e. faulty springs will not fit into the assembly that they are intended for.

The throughput yield for an assembly line can be defined as the number of good units produced divided by the total number of units, i.e. including scrapped units. Thus, faulty springs that are not removed prior to entering the assembly line will reduce the throughput yield.

It is therefore important to remove springs that do not meet the requirements before they enter an assembly line. Selected geometric properties of the springs are measured to determine if a specific spring should be scrapped or may continue to the assembly line.

In high volume production it is not efficient to measure each spring as such. Measurements are time consuming especially if performed manually. Therefore only samples from the production are measured. The number of samples selected is a trade-off between the cost of measuring a spring, the resulting throughput yield and the cost per scrapped assembled unit.

Reducing the number of samples is expected to reduce the throughput yield and vice versa. The cost per scrapped assembled unit is fixed for a given product.

A high throughput yield is desirable. Therefore there exists a need to optimise the helical spring geometric properties measurement process in order to increase the number of samples in an efficient way.

Length and diameter measurements are needed. In some cases the geometry of one or both spring ends in two perpendicular directions each are also needed to fully cover the geometric properties of the spring.

It is therefore an object of the present invention to provide a means of measuring the geometric properties of a spring in an efficient and reliable manner.

Geometric measurements of helical springs in the context of the present application consist of diameter and length measurements as well as geometry measurements of one or both spring ends and relative angle between spring ends.

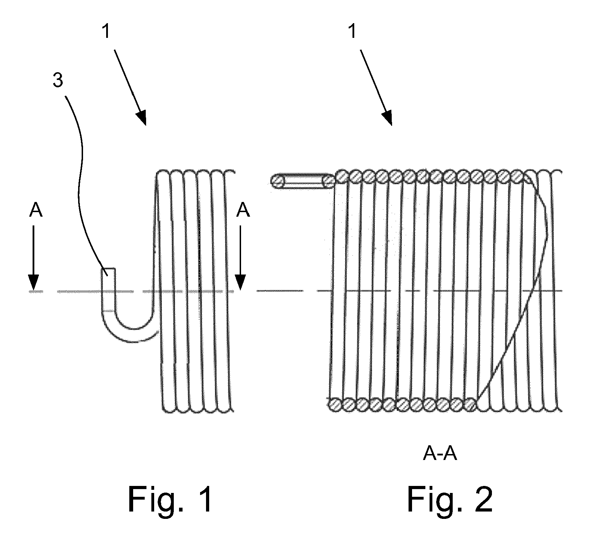

For example the spring end can be a hook. See for example figures 1 and 2 showing two perpendicular depictions of an example of a spring end.

### Summary of the invention

According to the present invention, this is achieved by an apparatus for measuring geometric properties of a helical metallic spring having a first end, a second end, a helical portion with a spring diameter, a spring length and a central axis, wherein the apparatus comprises;
- a vision measurement system, for visually measuring the geometric properties of the spring, the system comprising a detector and a light source directed towards the detector,
- a fixture, for holding the spring during measurements, such that the spring is located in the line-of-sight between the detector and the light source, and
- a rotator, wherein the rotator is operably connected to the fixture such that the fixture is rotatable about a rotation axis, wherein the fixture comprises a body, wherein the body is configured with two linear supports, for supporting the spring on the fixture, wherein the supports are parallel and offset from each other on either side of the central axis, wherein the width of the body is less than the spring diameter, and wherein the supports are arranged such that the central axis of the spring and the rotation axis of the fixture are coinciding, wherein the fixture comprises a holding means, for holding the spring onto the fixture during measurements.

Furthermore according to the present invention, this is achieved by a fixture for use in an apparatus for measuring geometric properties of a helical metallic spring having a first end, a second end, a helical portion with a spring diameter, a spring length and a central axis, wherein the fixture comprises a body, wherein the body comprises an attachment means, wherein the attachment means are configured for attachment to a rotator such that the fixture is rotatable about a rotation axis, wherein the body is configured with two linear supports, for supporting the spring on the fixture, wherein the supports are parallel and offset from each other on either side of the central axis, wherein the width of the body is less than the spring diameter, wherein the supports are arranged such that the central axis of the spring and the rotation axis of the fixture are coinciding, wherein the fixture comprises a holding means, for holding the spring onto the fixture during measurements.

Moreover according to the present invention, this is achieved by a method of measuring geometric properties of a helical metallic spring having a hook shaped first end, a second end, a helical portion with a helical portion with a spring diameter and a central axis, wherein the method comprises the steps of:
a. providing an apparatus according to the invention,
b. locating the spring in the fixture, such that the hook shaped first end is free of the fixture,
c. measuring the geometric properties of the spring including the steps of:
   I. aligning the spring in a first measuring position, wherein the hook shaped first end is parallel with the line-of-sight between the detector and the light source,
   II. rotating the spring about its central axis to a second measuring position, wherein the second measuring position is displaced 90 degrees from the first measuring position,
   III. simultaneously measuring the geometric properties of the hook shaped first end,
   IV. simultaneously measuring the remaining geometric properties of the spring, and
d. removing the spring from the fixture.

It is herewith achieved that the geometric properties of a spring can be measured in an efficient and reliable manner.

The spring is a helical metallic spring. The spring has a first end and a second end. One or both of the ends of the spring can be hook shaped. The spring has a helical portion with a spring diameter and a spring length. The central axis of the spring is a virtual property that is defined by a vector through the centre of all cross-sections of the spring. The central axis is linear when the spring is in an undeformed state.

The apparatus comprises a vision measurement system, a fixture and a rotator.

Vision measurement systems are commercially available.

In an embodiment of the apparatus the visual measurement system comprises a light source having a collimator for providing a collimated backlight and a telecentric lens for the detector.

The backlight is directed towards the detector. The object being measured is placed between the collimator and the lens.

In an embodiment of the apparatus the collimator for the backlight is a telecentric lens.

In an embodiment of the apparatus the light source is equipped with a bi-telecentric lens. A bi-telecentric lens provides a very even illumination of the detector.

The systems described above will provide an orthonormal view of the object to the detector so that correct linear measurements can be performed. Moreover with telecentric lenses the linear dimensions of the object are unchanged with object displacement when the object is within the depth of field of the detector lens.

The fixture is provided to support the spring during measurements. The spring is an elastic element and as such needs support in order to be undeformed when being measured.

The fixture is located in the line-of-sight between the collimator and the lens within the depth of field of the detector lens.

The fixture has a body with attachment means that are configured for attaching the fixture to the rotator. The attachment means could be any means suitable for securing the fixture to the rotator such that their relative position and angular orientation remains fixed.

The rotator is capable of rotating the fixture about a rotation axis. The rotator is arranged with the rotation axis within the depth of field of the detector lens. Moreover the rotator is arranged such that the rotation axis is perpendicular to the line-of-sight of the detector.

Two linear supports for supporting the spring are provided in the body. The supports are parallel and offset from each other on either side of the central axis and arranged in the body such that the central axis of the spring is coinciding with the rotation axis of the fixture.

The supports may be a line or a surface that conforms to the external shape of the spring.

The supports are linear in the direction of the rotation axis, such that the spring is linear and thereby undeformed when placed on the fixture.

It is thereby possible to establish the angular location of the spring ends.

The width of the body is less than the spring diameter. This enables the fixture to be oriented in a way where it is hidden behind the spring. Thus, the fixture is invisible to the detector and does not affect the geometric measurements of the spring.

In an embodiment of the invention the width of the fixture is less than the diameter of the spring in a region with the same length or longer than the length of the spring.

The spring is held in the fixture by a holding means. The holding means shall be capable of securing the spring in position on the fixture through a full rotation of the rotator. Moreover, the holding means shall not interfere with the geometric measurements that are to be obtained by the vision measurement system.

In an embodiment the holding means is a clamp that extends into the core of the spring.

A specific fixture applies to a specific spring diameter and length.

In the method according to the invention, an apparatus as described in claims 1 to 6 is used. The spring relevant to the method has a hook shaped first end and a second end that may optionally be hook shaped. However, the second spring end does not have to be an object for the geometric measurements.

The spring is located in the fixture either manually or by an automatic means, for example a robot.

When locating the spring in the fixture it is ensured that the first hook shaped spring end extends outside the fixture, such that it can be viewed from all angles.

Then the measurements of the hook shaped first end are initiated by aligning the spring in a first measuring position with the hook shaped first end oriented such that it is parallel with the line-of-sight between the detector and the light source. In this orientation the footprint of the hook shaped first end on the detector will be at its smallest, i.e. a line segment with a thickness corresponding to the gauge of the wire making up the spring.

Then the spring is rotated 90 degrees with the rotator to a second measuring position. In this orientation the footprint of the hook shaped first end on the detector will be at its largest, i.e. a front view of the hook shaped first end.

The remaining geometric properties of the spring are measured at any time during the previous steps which seems convenient.

At completion of the measurements the spring is removed from the fixture.

Based on the measurements of the geometric properties it can be decided if the spring should be approved or scrapped.

An embodiment of the apparatus according to the invention is further distinguished in that the holding means is a magnetic holding means.

It is herewith achieved that the spring can be secured to the fixture in simple and convenient manner.

In an embodiment of the invention the magnetic holding means comprise a permanent magnet.

This embodiment does not require an external power source to maintain a magnetic field capable of holding the spring onto the fixture.

Moreover, the holding means can be embedded into the body of the fixture such that it does not interfere with the measurements taken.

An embodiment of the apparatus according to the invention is further distinguished in that the body is formed with a through-hole, wherein the through-hole is substantially perpendicular to the rotation axis.

It is herewith achieved that both ends of the spring can be visible in the line-of-sight between the detector and the light source in two orientations for each end, where the two orientations are displaced 90 degrees in relation to each, i.e. a front and side view of each spring end.

The width of the trough-hole shall be sufficient to enable full view of the spring end through the trough-hole.

When the spring is located in the fixture it is aligned such that one spring end extends outside the free end of the fixture. The opposite end of the spring is aligned with the through-hole such that it is visible to the detector through said through-hole. The spring is oriented such that one of the measurements of the second end is taken with the fixture oriented such that the central axis of the through-hole is parallel with the line-of-sight between the detector and the light source.

It is hereby possible to perform the geometric measurements of both ends of the spring without having to remove the spring from the fixture. This increases the reliability and efficiency of the measurements of the geometric properties of the spring.

Moreover, the relative orientation of the first end of the spring in relation to the second end of the spring can be established, if angular feedback is provided when establishing the orientation of the spring ends.

An embodiment of the apparatus according to the invention is further distinguished in that the body is formed with a V-shaped cross section.

It is herewith achieved that the spring is easy to locate on the fixture. The V-shape acts as a guide to the correct position of the spring.

The two linear support lines are located on the surface of the V-shaped cross section.

An embodiment of the apparatus according to the invention is further distinguished in that the rotator comprises a stepper motor for rotating the fixture.

It is herewith achieved that the fixture can be orientated precisely with the rotator and that position feedback is readily available.

An embodiment of the method according to the invention is further distinguished in that the spring has a hook shaped second end, wherein step a. further comprises the step of providing an apparatus with a fixture with a body that is formed with a through-hole, wherein the through-hole is substantially perpendicular to the rotation axis, wherein step c. after step III. comprises the additional steps of:
III.i. aligning the spring in a third measuring position, wherein the hook shaped second end is parallel with the line-of-sight between the detector and the light source,
III.ii. rotating the spring about its central axis to a fourth measuring position, wherein the fourth measuring position is displaced 90 degrees from the third measuring position, and
III.iii. simultaneously measuring the geometric properties of the hook shaped second end.

It is herewith achieved that it is possible to perform the geometric measurements of both ends of the spring without having to remove the spring from the fixture. This increases the reliability and efficiency of the measurements of the geometric properties of the spring.

Moreover, the relative orientation of the first end of the spring in relation to the second end of the spring can be established if angular feedback is provided when establishing the orientation of the spring ends.

It should be emphasized that the term "comprises/comprising/comprised of" when used in this specification is taken to specify the presence of stated features, integers, steps or components but does not preclude the presence or addition of one or more other features, integers, steps, components or groups thereof.

### Brief description of the drawings

The invention will be explained in more detail below with reference to the accompanying drawing, where:
- Fig. 1: is a detail side view of the end region of a spring,
- fig. 2: is a section view of section A-A in fig. 1 of the end region of the spring,
- fig. 3: is a perspective view of an apparatus according to the invention,
- fig. 4: is a perspective view of a fixture with a spring,
- fig. 5: is a perspective view of the fixture of fig. 4 viewed from the detector, with the fixture in a fourth measurement position,
- fig. 6: is an orthonormal view of the fixture with a spring, and
- fig. 7a-d: are perspective views of the fixture in four measurement positions.

In the following, the invention will be described in greater detail with reference to embodiments shown by the enclosed figures. It should be emphasized that the embodiments shown are used for example purposes only and should not be used to limit the scope of the invention.

### Detailed description of the embodiments

In the explanation of the figures, identical or corresponding elements will be provided with the same designations in different figures. Therefore, a detailed explanation of all details will not necessarily be given in connection with each single figure/embodiment.

Fig. 1 shows a detail side view of the spring and fig. 2 shows a section view of section A-A in fig. 1 of the end region of the spring.

The spring end 3, as is best seen on fig. 1 is hook shaped in this embodiment.

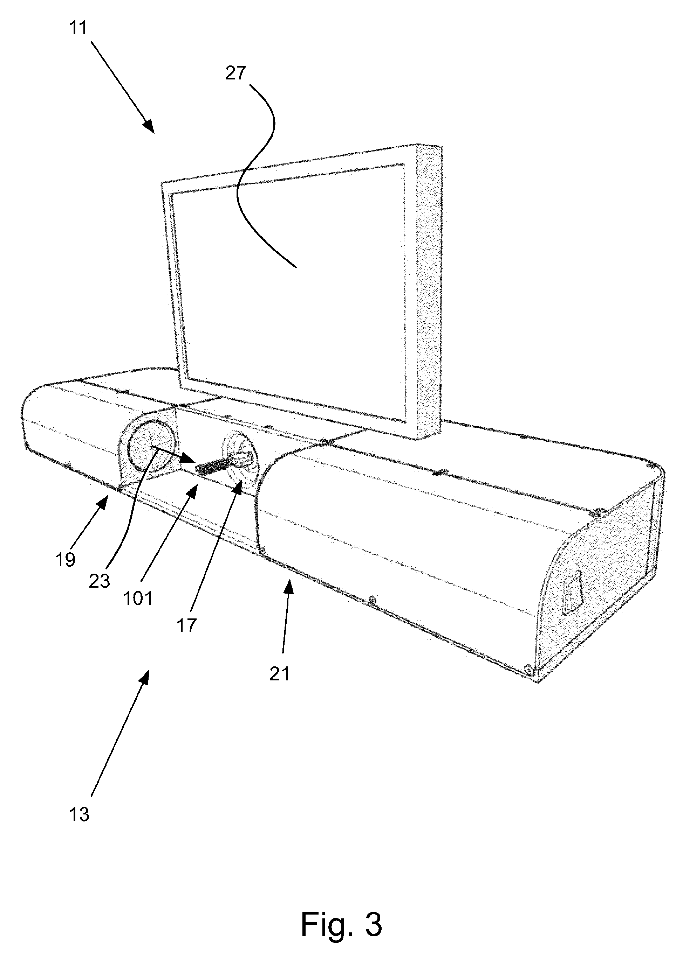

Fig. 3 shows a perspective view of an apparatus 11 according to the invention.

The apparatus 11 comprises a vision measurement system 13, a fixture 101 and a rotator 17. The rotator 17 comprises a stepper motor for rotating the fixture 101.

The vision measurement system 13 includes a detector 19 and a light source 21.

The detector 19 and the light source 21 are located at opposite ends of the apparatus 11. The light source 21 is pointed towards the detector 19 which in turn is facing the light source 21. The vision measurement system 13 comprises a collimator and a telecentric lens.

The fixture 101 is positioned in the line-of-sight 23 between the detector 19 and the light source 21.

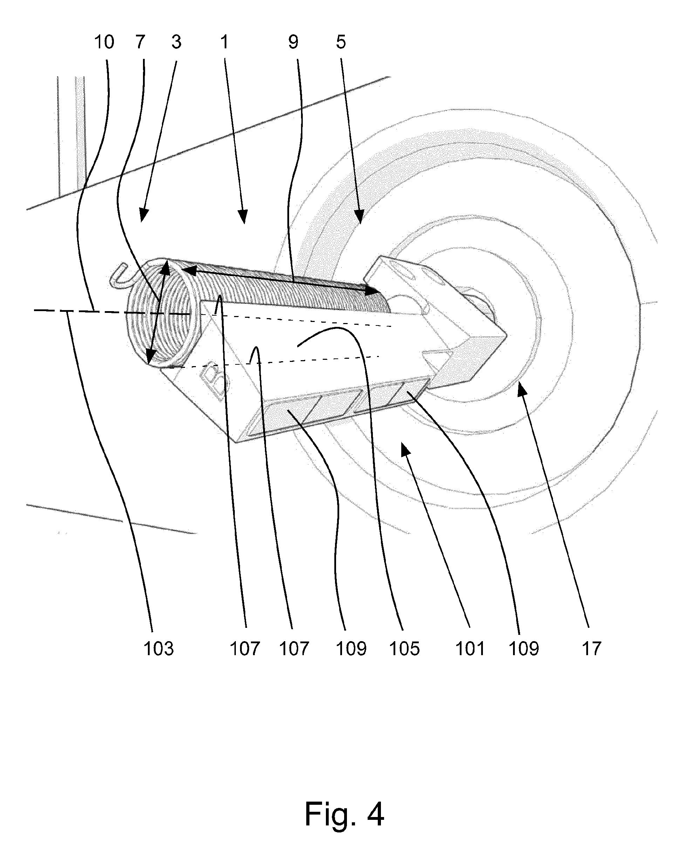

Fig. 4 is a perspective view of a fixture 101 with a spring 1.

The spring 1 is a helical metallic spring. The spring 1 has a first end 3 and a second end 5. In the embodiment shown the first and second ends 3, 5 are hook shaped. The spring has a helical portion with a spring diameter 7, a spring length 9 and a central axis 10.

The fixture 101 is attached to the rotator 17 in a cantilevered configuration. The rotator 17 is operably connected to the fixture 101 such that the rotator 17 can rotate the fixture 101 about a rotation axis 103. The rotation axis 103 is coinciding with the central axis 10 of the spring 1.

The fixture 101 with the spring 1 attached is oriented such that the central axis of the spring 1 is orthogonal with the line-of-sight 23 of the detector 19, see fig. 3.

With the above setup the vision measurement system 13 produces an orthonormal view of the spring 1 from which the geometric measurements can be taken. The orthonormal view can be presented on a screen 27, see fig. 3.

The fixture 101 comprises a body 105. The fixture 101 has two angled support faces defining a V with two support surfaces. Two linear support lines 107 are established on the two support surfaces. The spring 1 is in contact with the fixture 101 along the support lines 107 that are parallel. In fig. 4, the support lines 107 are indicated with a dashed line as they are hidden from view behind the body 105.

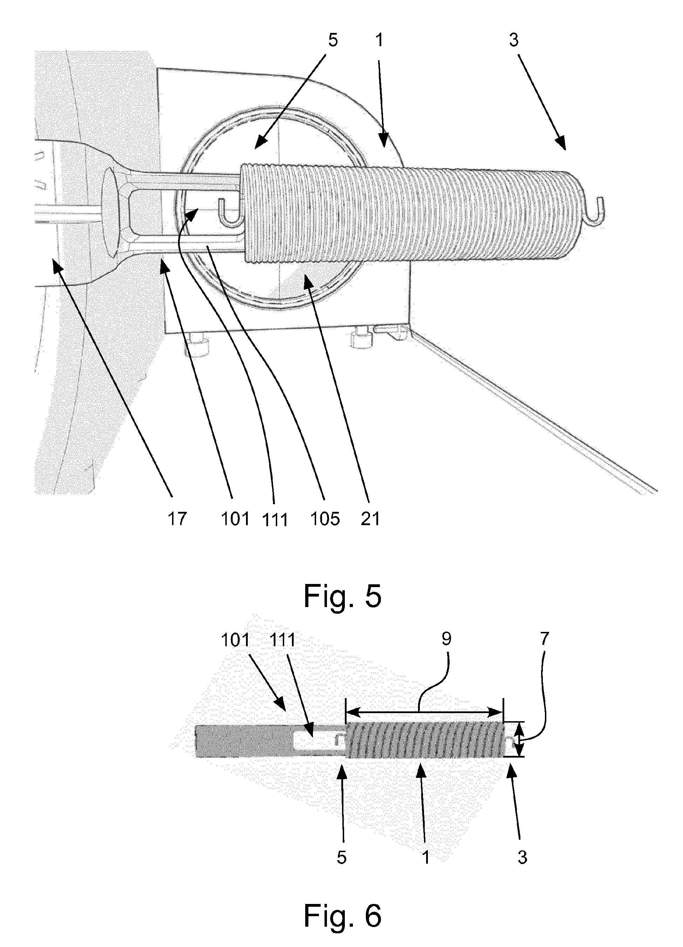

The width of the body is less than the spring diameter 7. This is seen more clearly in fig. 5.

The fixture 101 comprises holding means 109 in the form of permanent magnets. The holding means 109 provide an even holding force such that the spring 1 is maintained in contact with the fixture 101 throughout a complete rotation of the fixture 101. As the support lines 107 are linear the spring 1 will assume an undeformed state when placed on the fixture 101.

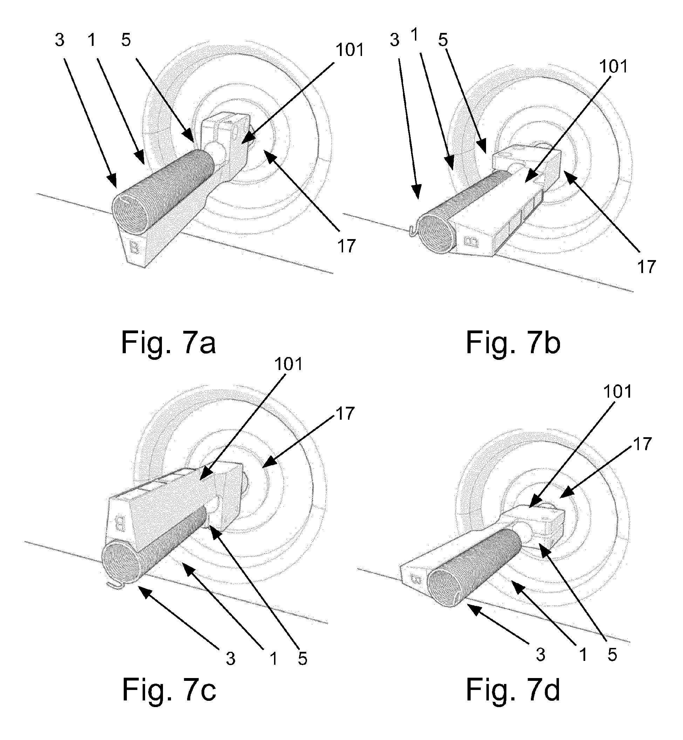

Fig. 5 is a perspective view of the fixture 101 of fig. 4 as seen from the detector 19 in the direction of the line-of-sight 23, with the fixture 101 in a fourth measurement position. The measurement positions will be described further in connection with fig. 7a-b.

The body 105 is formed with a through-hole 111 so that the second spring end 5 is visible to the light source 21 and the detector 19.

In this position the length 9 and diameter 7, see fig. 4, can be measured as the width of the fixture 101 in the region where the spring 1 is located is less than the diameter 7 of the spring 1. Therefore only the spring 1 is visible to the detector 19 in this region.

In the fourth measurement position the line-of-sight 23, see fig. 3, is orthogonal to a plane through the hook shaped second end 5 of the spring 1.

In this measurement position it is possible to measure the geometric properties of the second spring end 5, the length 9 and diameter 7 of the spring 1 from the orthonormal view in fig. 6 as generated with the detector 19.

Fig. 7a-d are perspective views of the fixture 101 in four measurement positions.

The measuring of the geometric properties of the spring 1 is initiated by locating the spring 1 in the fixture 101, such that the hook shaped first end 3 is free of the fixture 101 and such that the hook shaped second end 5 is visible through the through-hole111. The hook shaped second end 5 shall be arranged such that it is visible to the detector through the through-hole in either the third or fourth measurement position described later.

The next step shown in fig. 7a is to align the spring in a first measuring position by turning the rotator 17 until the hook shaped first end 3 is parallel to the line-of-sight 23, see fig. 3. In the orthonormal view generated by the detector 19, see fig. 3 the first end 3 appears as a line segment extending from the spring 1 in the direction of the central axis 103, see fig. 4.

In fig. 7b, the rotator 17 has been operated to rotate the fixture 101 with the spring 1 ninety (90) degrees about the central axis 103 of the spring 1 to a second measurement position. In the orthonormal view the outline of the hook shaped first end 3 can be measured.

In the next step shown in fig. 7c, the rotator has been operated to rotate the fixture 101 with the spring 1 about the central axis 103 of the spring 1 to a third measurement position. In the third measurement position the hook shaped second end 5 is parallel to the line-of-sight 23, see fig. 3. In the orthonormal view generated by the detector 19, see fig. 3 the second end 5 appears as a line segment extending from the spring 1 in the direction of the central axis, see fig. 4.

The relative alignment of the first and second spring ends 3, 5 can be established based on the angular position of the fixture 101 in the first and the third measurement position.

In fig. 7d, the rotator 17 has been operated to rotate the fixture 101 with the spring 1 ninety (90) degrees about the central axis 103 of the spring 1 to a fourth measurement position. In the orthonormal view the outline of the hook shaped second end 5 can be measured.

The remaining geometric properties, e.g. spring length 9 and diameter 7 are measured simultaneously.

It is to be noted that the figures and the above description have shown the example embodiments in a simple and schematic manner. The internal electronic and mechanical details have not been shown or described in detail since the person skilled in the art should be familiar with these details and they would just unnecessarily complicate this description.

## Claims

1. Apparatus (11) for measuring geometric properties of a helical metallic spring (1) having a first end (3), a second end (5), a helical portion with a spring diameter (7), a spring length (9) and a central axis (10), wherein the apparatus (11) comprises;
- a vision measurement system (13), for visually measuring the geometric properties of the spring (1), the system (13) comprising a detector (19) and a light source (21) directed towards the detector (19),
- a fixture (101), for holding the spring (1) during measurements, such that the spring (1) is located in the line-of-sight (23) between the detector (19) and the light source (21), and
- a rotator (17), wherein the rotator (17) is operably connected to the fixture (101) such that the fixture (101) is rotatable about a rotation axis (103),
wherein the fixture (101) comprises a body (105), wherein the body (105) is configured with two linear supports (107), for supporting the spring (1) on the fixture (101), wherein the supports (107) are parallel and offset from each other on either side of the central axis (10), wherein the width of the body (105) is less than the spring diameter, wherein the support lines (107) are arranged such that the central axis of the spring (1) and the rotation axis (103) of the fixture (101) are coinciding, wherein the fixture (101) comprises a holding means (109), for holding the spring (1) onto the fixture (101) during measurements.

2. Apparatus (11) according to claim 1, **characterized in that** the holding means (109) is a magnetic holding means.

3. Apparatus (11) according claim 1 or 2, **characterized in that** the body (105) is formed with a through-hole (111), wherein the through-hole (111) is substantially perpendicular to the rotation axis (103).

4. Apparatus (11) according to any of the previous claims, **characterized in that** the body (105) is formed with two angled support faces defining a V.

5. Apparatus (11) according to any of the previous claims, **characterized in that** the rotator (17) comprises a stepper motor for rotating the fixture (101).

6. Apparatus (11) according to any of the previous claims, **characterized in that** the vision measurement system (13) comprises a collimator and a telecentric lens.

7. Fixture (101) for use in an apparatus (11) for measuring geometric properties of a helical metallic spring (1) having a first end (3), a second end (5), a helical portion with a spring diameter (7), a spring length (9) and a central axis (10), wherein the fixture (101) comprises a body (105), wherein the body (105) comprises an attachment means, wherein the attachment means are configured for attachment to a rotator (17) such that the fixture (101) is rotatable about a rotation axis (103), wherein the body (105) is configured with two linear support lines (107), for supporting the spring (1) on the fixture (101), wherein the support lines (107) are parallel, wherein the support lines (107) are arranged with a mutual distance that is less than the spring diameter, wherein the support lines (107) are arranged such that the central axis of the spring (1) and the rotation axis (103) of the fixture (101) are coinciding, wherein the fixture (101) comprises a holding means (109), for holding the spring (1) onto the fixture (101) during measurements.

8. Fixture (101) according to claim 7, **characterized in that** the holding means (109) is a magnetic holding means.

9. Fixture (101) according claim 7 or 8, **characterized in that** the body (105) is formed with a through-hole (111), wherein the through-hole (111) is substantially perpendicular to the rotation axis (103).

10. Fixture (101) according to any of claims 7 to 9, **characterized in that** the body (105) is formed with a V-shaped cross section.

11. Method of measuring geometric properties of a helical metallic spring (1) having a hook shaped first end (3), a second end (5), spring diameter and a central axis, wherein the method comprises the steps of:
a. providing an apparatus (11) according to any of the claims 1-6,
b. locating the spring (1) in the fixture (101), such that the hook shaped first end (3) is free of the fixture (101),
c. measuring the geometric properties of the spring (1) including the steps of:
I. aligning the spring (1) in a first measuring position, wherein the hook shaped first end (3) is parallel with the line-of-sight (23) between the detector (19) and the light source (21),
II. rotating the spring (1) about its central axis to a second measuring position, wherein the second measuring position is displaced 90 degrees from the first measuring position,
III. simultaneously measuring the geometric properties of the hook shaped first end (3),
IV. simultaneously measuring the remaining geometric properties of the spring (1), and
d. removing the spring (1) from the fixture (101).

12. Method according to claim 8, wherein the spring (1) has a hook shaped second end (5), wherein step a. further comprises the step of providing an apparatus (11) with a fixture (101) with a body (105) that is formed with a through-hole (111), wherein the through-hole (111) is substantially perpendicular to the rotation axis (103), wherein step c. after step III. comprises the additional steps of:
III.i. aligning the spring (1) in a third measuring position, wherein the hook
shaped second end (5) is parallel with the line-of-sight (23) between the detector (19) and the light source (21),
III.ii. rotating the spring (1) about its central axis to a fourth measuring position, wherein the fourth measuring position is displaced 90 degrees from the third measuring position, and
III.iii. simultaneously measuring the geometric properties of the hook shaped second end (5).
